# EUROPEAN PATENT SPECIFICATION

(11) **EP 3 903 215 B1**
(45) Date of publication and mention of the grant of the patent: **25.03.2026**
(21) Application number: 20740838.6
(22) Date of filing: 17.01.2020
(51) Int. Cl.: G06F 21/56, G06F 16/242, G06F 16/27, G06F 9/455

(54) **BUCKETIZING DATA INTO BUCKETS FOR PROCESSING BY CODE MODULES**
BUCKETING VON DATEN IN BUCKETS ZUR VERARBEITUNG DURCH CODEMODULE
CATÉGORISATION DE DONNÉES EN CATÉGORIES DESTINÉES À ÊTRE TRAITÉES PAR DES MODULES DE CODE

(30) Priority: 18.01.2019 US 201916251760
(43) Date of publication of application: 03.11.2021
(73) Proprietor: Huawei Technologies Co., Ltd., Longgang District, Shenzhen, Guangdong 518129 (CN)
(72) Inventor: ICHILEVICI DE OLIVEIRA, Martin, Edmonton, Alberta T6G 2E8 (CA); HO, Man Pok, Markham, Ontario L3R 5A4 (CA); AMARAL, Jose Nelson, Edmonton, Alberta T6G 2E8 (CA); WANG, Kai-Ting Amy, Markham, Ontario L3R 5A4 (CA); GAO, Yaoqing, Toronto, Ontario L3R 5A4 (CA); CHAN, Bryan, Markham, Ontario L3R 5A4 (CA)
(74) Representative: Gill Jennings & Every LLP
(86) International application number: PCT/CN2020/072631
(87) International publication number: WO 2020/147807

(56) References cited:
- CN-A- 105 302 838
- US-A1- 2016 139 941
- US-A1- 2016 246 831
- US-B1- 9 934 051
- US-B2- 7 865 515
- US-B2- 8 060 789
- KEE SUK ET AL: "Letter from the Editor-in-Chief Special Issue on Adapting Database Systems to Flash Storage Search: Multi-Path Search for Tree-based Indexes to Exploit Internal Parallelism of Flash SSDs", IEEE COMPUTER SOCIETY LETTERS AND KENNETH SALEM 35 CONFERENCE AND JOURNAL NOTICES, 1 January 2014 (2014-01-01), pages 19 - 26, XP055896127, Retrieved from the Internet <URL:http://sites.computer.org/debull/A14june/A14JUN-CD.pdf#page=21> [retrieved on 20220228]

## Description

### Background

A relational database stores data in relational tables that are structured as rows and columns. To access data stored in tables of a relational database, database queries can be submitted to a database management system (DBMS) that processes the database queries to access the tables. Table access can include reading data from the tables, and/or writing data to the tables, where writing data can include adding data, deleting data, or modifying data. Processing queries for large databases can involve consumption of large amounts of processing resources and can take a relatively long time.

US 2016/246831 A1 discloses data storage device examples for accelerating database operations and associated methods.

Kee Suk ET AL, "Letter from the Editor-in-Chief Special Issue on Adapting Database Systems to Flash Storage Search: Multi-Path Search for Tree-based Indexes to Exploit Internal Parallelism of Flash SSDs", IEEE Computer Society Letters and Kenneth Salem 35 Conference and Journal Notices, (20140101), pages 19 - 26, URL: http://sites.computer.org/debull/A14june/A14JUN-CD.pdf#page=21, (20220228), XP055896127 discloses two new algorithms, GD2L and CAC, for managing the buffer cache and the SSD in a database management system.

### Summary

According to aspects of the present disclosure, to reduce processing resources of a host processor executing a database management system (DBMS), bucketization of data items stored in a memory can be performed. The bucketization produces buckets of data items. Each bucket includes data items that share a common characteristic, where sharing a common characteristic can refer to sharing just one common characteristic or sharing multiple common characteristics. The buckets of data items are then sent to the host processor executing the DBMS, which is able to process each bucket of data items using a respective specialized code module that is configured for a common characteristic(s) of the bucket. The specialized code module includes Just-in-Time (JIT) compiled code.

According to an aspect of the present disclosure, there is provided a controller comprising bucketization logic. The bucketization logic is configured to: receive a bucketization indication from a host processor, in response to the bucketization indication, partition data stored in a memory of a storage device into buckets, wherein a first bucket of the buckets comprises data items that share a first common characteristic, and send data items of the first bucket to the host processor for processing by the host processor using a first Just-In-Time, JIT, compiled code module configured for the first common characteristic of the first bucket, and bucket rows re-arranging logic configured to rearrange data items of the first bucket such that data items which correspond to values of a common field are stored in sequence prior to sending the data items of the first bucket to the host processor.

In any of the preceding aspects, a second bucket of the buckets comprises data items that share a second common characteristic, and the bucketization logic is configured to send data items of the second bucket to the host processor for processing by the host processor using a second code module configured for the second common characteristic of the second bucket.

In any of the preceding aspects, the bucketization indication comprises a bucket condition, and the bucketization is to assign a respective data item to the first bucket responsive to determining a relationship of a characteristic of the respective data item with respect to the bucket condition.

In any of the preceding aspects, the bucket condition specifies that a data item comprising a field having a null value belongs to the first bucket.

In any of the preceding aspects, the bucket condition specifies that a data item comprising a field having a regular length belongs to the first bucket.

In any of the preceding aspects, the bucket condition specifies that a data item comprising a field having a same constant value belongs to the first bucket.

In any of the preceding aspects, the bucket condition specifies that a data item comprising a field with a length having a specified relationship to a specified length threshold belongs to the first bucket.

In any of the preceding aspects, the controller is part of the storage device.

In any of the preceding aspects, the controller is part of a computation device between the storage device and the host processor.

In any of the preceding aspects, the controller further comprises filtering logic configured to receive a filtering indication from the host processor, and filter data in the memory to select a subset of the data in the memory, and the bucketization logic is configured to identify data items belonging to the first bucket from the subset of data.

According to another aspect of the present disclosure, there is provided a non-transitory machine-readable storage medium comprising instructions that upon execution cause a controller comprising one or more processors to send a bucketization indication to a storage device to partition data items stored in a memory of the memory subsystem into a plurality of buckets, where data items in each respective bucket of the plurality of buckets share a corresponding common characteristic. The instructions further cause the controller to receive, from the storage device, the plurality of buckets of data items produced in response to the bucketization indication, wherein data items in each of the plurality of buckets which correspond to values of a common field are received in sequence, and execute Just-In-Time, JIT, compiled code modules to process data items in respective buckets of the plurality of buckets, each code module configured for the corresponding common characteristic of the respective bucket.

In any of the preceding aspects, the instructions further casue the controller to generate the code modules at runtime using information relating to a database query and information of the data available at runtime.

In any of the preceding aspects, the instructions upon execution cause the host processor to receive the database query to access a database comprising the data stored in the storage device, and determine the plurality of buckets based on the database query, and generate the code modules at runtime in response to the database query.

In any of the preceding aspects, sending the bucketization indication to the storage device comprises sending bucket conditions to the storage device, each respective bucket condition of the bucket conditions specifying the corresponding common characteristic of the respective bucket of the plurality of buckets.

In any of the preceding aspects, the instructions upon execution cause the host processor to receive a first portion of data items of a first bucket from the storage device while the storage device is assigning a second portion of data items to the first bucket.

In any of the preceding aspects, the instructions upon execution cause the host processor to send a filtering indication to the storage device to cause the storage device to filter the data in the memory to select a subset of the data in the memory, and partition the data stored in the memory into the plurality of buckets by dividing the subset of data.

According to another aspect of the present disclosure, there is provided a method comprising sending, by a host processor, a bucketization indication to a storage device, the bucketization indication comprising a bucket condition to cause the storage device to determine which data stored in a memory of the storage device belong to a bucket, wherein data items in the bucket share a corresponding common characteristic. The method further comprises receiving, by the host processor from the storage device, the data items of the bucket produced in response to the bucketization indication, wherein data items of the bucket which correspond to values of a common field are received in sequence, and executing a Just-In-Time, JIT, compiled code module to process the data items in the bucket, the code module configured for the common characteristic of the bucket.

In any of the preceding aspects, wherein the bucketization indication comprises another bucket condition to cause the storage device to determine which data stored in the memory belong to a further bucket.

In any of the preceding aspects, the method further comprises receiving, by the host processor from the storage device, the data items of the further bucket produced in response to the bucketization indication, and executing a further code module to process the data items in the further bucket, the further code module configured for a further common characteristic of the further bucket.

### Brief Description of the Drawings

Some implementations of the present disclosure are described with respect to the following figures.
Fig. 1A and 1B are block diagrams of a host processor running a database management system interacting with a storage device that stores data of a database, according to some implementations of the present disclosure.
Fig. 2 illustrates an example of bucketizing rows of a database table according to some implementations of the present disclosure.
Fig. 3 is a flow diagram of database query processing according to some implementations of the present disclosure.
Fig. 4 illustrates filtering and bucketization performed by a controller according to some implementations of the present disclosure.
Fig. 5 illustrates bucket processing using specialized code modules according to some implementations of the present disclosure.
Fig. 6 is a block diagram of a processing pipeline that involves filtering and bucketizing of data at a storage device, transferring the buckets of data to a processing resource, and processing the buckets at the processing resource, in accordance with some implementations of the present disclosure.
Fig. 7 illustrates re-arranging data fields of rows of a bucket, according to further implementations of the present disclosure.
Fig. 8 is a block diagram of a system according to further implementations of the present disclosure.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

In the present disclosure, use of the term "a," "an", or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In some examples, data of a database can be stored in a storage device that persistently stores data, such as a solid-state drive (SSD). An SSD refers to a storage device that uses an integrated circuit memory to persistently store data. An SSD can include a flash memory or any other type of non-volatile memory that can retain data when power is removed from the non-volatile memory.

An SSD can include an embedded controller that can perform various tasks, including any or some combination of the following: caching data, encrypting or decrypting data, applying error detection and correction of data, performing wear leveling of data across storage regions of a memory to prevent some memory regions from wearing out faster than other regions (which can occur in flash memory, phase change memory, etc.), and/or other tasks.

As the embedded controllers included in SSDs have become more powerful, certain computations associated with processing of database queries to access data items of the database stored in the SSDs can be offloaded by a host processor running a database management system (DBMS) to the embedded controllers in SSDs. A host processor can include a processor or multiple processors. A processor can include a microprocessor, a core of a multi-core microprocessor, a microcontroller, a programmable integrated circuit, a programmable gate array, a digital signal processor, or another hardware processing circuit.

An example of a computation that can be offloaded from the host processor to the embedded controller included in the SSD includes data filtering, which processes data stored in a table to determine whether or not the data is relevant to a specific database query (i.e., the data satisfies a condition, referred to as a predicate, in the database query). If a data segment of the data is not relevant to the database query, then the filtering would exclude the data segment from data sent from the SSD to the host processor. In other words, by filtering data at the SSD, only data segments that are relevant to the database query are sent to the host processor, which improves efficiency at the host processor by reducing the amount of data processed by the host processor.

Although filtering performed at an SSD can reduce the amount of data that is to be processed by the host processor, the amount of data that is to be processed by the host processor can still be relatively large. For example, for a database that includes tables with millions of rows of data, the number of rows of data that remain after the filtering can still be quite large. As a result, if the host processor has an insufficient amount of processing resources to allocate to processing the filtered rows of data, the processing of the filtered rows of data can take a long period of time. A "processing resource" of a host processor allocated to a given process can refer to a portion (e.g., a processing core of a multi-core processor) of the host processor allocated to the given process, or a time duration of the host processor allocated to the given process. Alternatively, a host processor with a larger amount of processing resources may have to be allocated to process the filtered rows, which can lead to increased component costs or can lead to less host processing resources being unavailable for other computation tasks.

In accordance with some implementations of the present disclosure, bucketization of data stored in database tables can be offloaded to an SSD (or more generally, to a storage device). As used here, a "storage device" can refer to any device that persistently stores data and includes one or more non-volatile memory devices and an embedded controller. Although reference is made to examples where the storage device is an SSD, it is noted that in other examples, the storage device can include a disk-based storage device that includes an embedded controller and a non-volatile memory device in the form of a storage disk. The storage device may be included in a housing that contains the one or more non-volatile memory devices and an embedded controller, a circuit board on which the one or more non-volatile memory devices and an embedded controller are mounted, and so forth.

Bucketization, as referred to herein, is an action of partitioning data stored in a database into buckets, where a bucket includes a collection of data items that share one or more characteristics. In some embodiments, the collection of data item are stored in a same region of a sequential memory. Data items refer to rows or other blocks of data of a database. Each bucket includes data items that share one or more common characteristics. The data items included in buckets are sent to a host processor for processing by the host processor using corresponding specialized code modules that are configured for the respective common characteristics of the corresponding buckets. In the claimed examples of the present disclosure, the specialized code modules are Just-In-Time (JIT) compiled code modules.

JIT compilation refers to compiling, at runtime, a program code file (which can include source code or bytecode) to produce machine executable code. Source code refers to program code written in a given programming language. Bytecode, which is also referred to as virtual machine code, is produced by compiling source code (e.g. object-oriented programming source code) to run on a virtual machine using bytecode compilation. Bytecode can be executed by a virtual machine to perform tasks specified in the bytecode. By compiling the bytecode into machine executable code using a JIT compiler, the machine executable code can be executed more efficiently and at higher speeds by the host processor.

JIT compilation of program code files, by a JIT compiler, can leverage information available at runtime to produce machine executable code that is more tailored to data with characteristics indicated by the information available at runtime. For example, at runtime of a database engine that includes a DBMS, a query plan for a database query, a schema for a table involved in the database query, and statistics associated with a table (e.g., number of rows, number of rows with a specific value such as a null value or constant value, etc.) are available. A field (also referred to as an attribute or column) having a specific value is an example of a common characteristic that can be shared by multiple rows of a table. Thus, using the statistics of the table available at runtime, the database engine can determine to request a bucketization that generates a bucket including table rows each with a field that has the specific value. The host processor can also perform JIT compilation of a program code file of the database query to produce a specialized code module (including machine executable code) that is tailored to process rows with the field that has the specific value in a more efficient manner.

In other examples, table rows can share other common characteristics, discussed further below.

The schema and query plan available for a database query that are available at runtime can also be used to configure a specialized code module to more efficiently process data items of a respective bucket. The schema defines fields of a table. The query plan includes a sequence of tasks to be performed for producing a result for the database query. Based on the sequence of tasks included in the query plan, the database engine can determine that a task of the query plan involves a computation based on a given field of a table (as defined by the respective schema). For the task, the database engine can determine that a specialized JIT compiled code module to process rows including the given field assigned a specific value may enhance efficiency, in which case the database engine can cause creation of a bucket including rows having the given field assigned the specific value, and can cause JIT compilation of the database query to generate the specialized JIT compiled code module to process the data items in the rows of the bucket.

In other examples, instead of using JIT compiled code modules, other types of specialized code modules can be used for processing data items of respective buckets. Examples of such other specialized code modules include stored procedures, interpreted bytecode, and so forth.

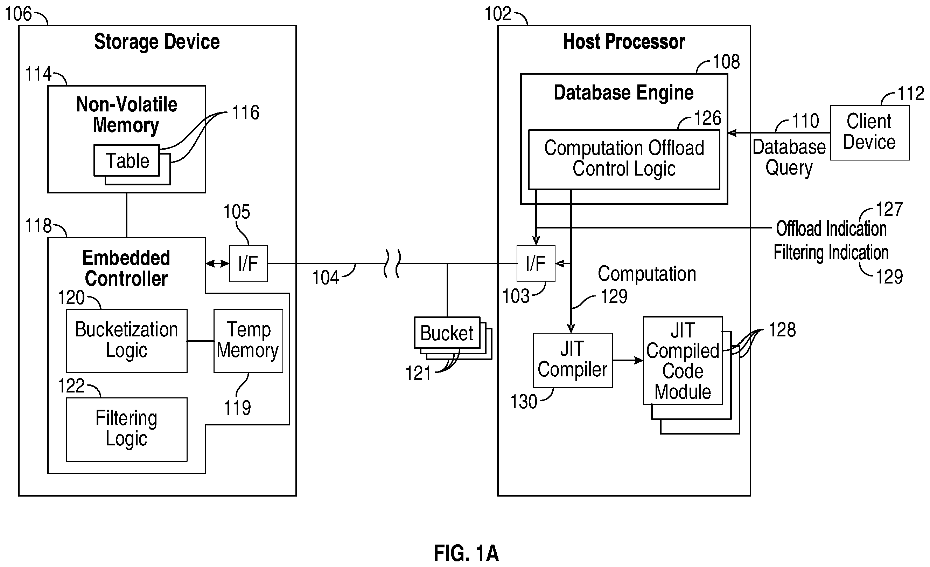

Fig. 1A is a block diagram of an example arrangement that includes a host processor 102 that is coupled over a link 104 (such as a data bus) to a storage device 106. The link 104 can include a network or a dedicated channel between the host processor 102 and the storage device 106. The host processor 102 includes an interface 103 to communicate over the link 104, and the storage device 106 includes an interface 105 to communicate over the link 104. An "interface" can include a transceiver to transmit and receive data.

An example of the storage device 106 includes an SSD. Although the host processor 102 is shown as being coupled to just one storage device 106, it is noted in other examples, the host processor 102 can be coupled to multiple memory subsystems (e.g., multiple SSDs).

The host processor 102 includes a database engine 108 (which includes a DBMS) that receives database queries, such as a database query 110 from a client device 112. In some examples, a database query can be a Structured Query Language (SQL) query. A client device 112 can be a desktop computer, a notebook computer, a tablet computer, a smartphone, a server computer, or any other electronic device that is able to submit database queries to the host processor 102 to access a database stored in the storage device 106. Although just one client device 112 is depicted in Fig. 1A, it is noted that in other examples, multiple clients 112 can be connected to the host processor 102.

As used here, an "engine" can refer to a hardware processing circuit, which can include any or some combination of a microprocessor, a core of a multi-core microprocessor, a microcontroller, a programmable integrated circuit, a programmable gate array, a digital signal processor, or another hardware processing circuit. Alternatively, an "engine" can refer to a combination of a hardware processing circuit and machine-readable instructions (software and/or firmware) executable on the hardware processing circuit.

The database engine 108 is configured to process database queries to access a database stored in the storage device 106.

The storage device 106 includes a non-volatile memory 114, which can be implemented using one or more non-volatile memory devices. Examples of non-volatile memory devices can include any or some combination of the following: a flash memory device, a phase change memory device, or any other type of non-volatile memory device. A non-volatile memory device is able to retain data stored in the non-volatile memory device if power is removed from the non-volatile memory device.

The non-volatile memory 114 stores tables 116 of a database. In examples where there are multiple storage devices 116 coupled to the host processor 102, the tables of the database can be distributed across the storage devices.

The storage device 106 also includes an embedded controller 118. An "embedded" controller refers to a controller that is part of the storage device 106. As used here, a "controller" can refer to a hardware processing circuit, or a combination of a hardware processing circuit and machine-readable instructions executable on the hardware processing circuit.

The embedded controller 118 includes a bucketization logic 120 that is configured to generate buckets that share respective common characteristics, and a filtering logic 122 that is configured to filter data stored in the tables 116. A "logic" can refer to a portion of the hardware processing circuit of the embedded controller 118, or alternatively, to machine-readable instructions executable by the embedded controller 118.

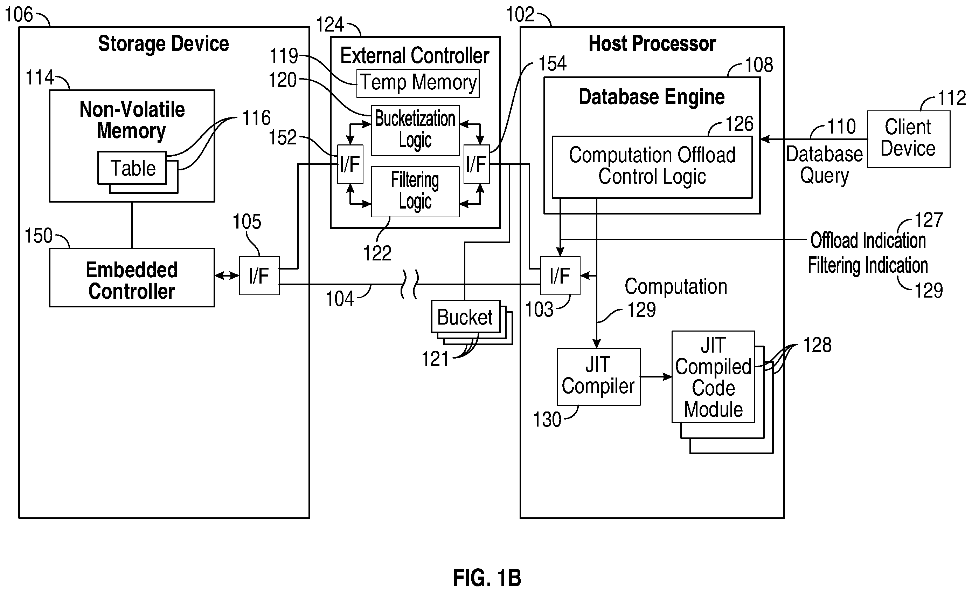

In alternative example embodiments, as shown in Fig. 1B, instead of including the bucketization logic 120 and/or the filtering logic 122 in an embedded controller 150 of the storage device 106, the bucketization logic 120 and/or filtering logic 122 is included in an external controller 124 (external of the storage device 106) that is coupled between the host processor 102 and the storage device 106. For example, the external controller 124 can be included in a computation device, such as an application specific integrated circuit (ASIC) device, a circuit board, and so forth. The external controller 124 includes an interface 152 to communicate with the interface 105 of the storage device 106, and an interface 154 to communicate with the interface 103 of the host processor 102.

In another example embodiment, the bucketization logic 120 is implemented in the database engine 108.

The bucketization logic 120 produces buckets 121 that are stored in a temporary memory 119 (in the embedded controller 118 of Fig. 1A or the external controller 124 of Fig. 1B) and provided to the host processor 120 for processing by the database engine 108. The temporary memory 119 may be volatile memory or virtual memory that temporarily stores the data items included in the buckets 121 that are to be transferred to the database engine 108. The temporary memory 119 can include memory implemented using any or some combination of one or more dynamic random access memory (DRAM) devices, static random access memory (SRAM) devices, and so forth.

In some examples, as the buckets 121 are generated, the controller 118 or 124 can use a push-based implementation to push the data items of the buckets 121 to the database engine 108. With the push-based implementation, the data items included in the buckets 121 can be transferred to the database engine 108 without the database engine 108 first requesting the data items included in the buckets 121. In other examples, the database engine 108 can use a pull-based implementation to retrieve the data items included in the buckets 121 by submitting read requests to the storage device 106 for specific buckets 121.

The database engine 108 includes a computation offload control logic 126, which can be implemented as a hardware processing circuit of the database engine 108 or as machine-readable instructions executable by the database engine 108. In other examples, the computation offload control logic 126 is separate from the database engine 108.

The computation offload control logic 126 determines, for the received database query 110, whether one or more buckets 121 are to be generated. If so, the computation offload control logic 126 requests offloading of bucketization by sending a bucketization indication 127 to the embedded controller 118 of the storage 106 (or the external controller 124) to offload bucketization to the embedded controller 118 (or the external controller 124). In response to receipt of the bucketization indication 127, the bucketization logic 120 generates the one or more buckets. In a different example, the computation offload control logic 126 may determine to generate zero buckets, in which case the computation offload control logic 126 does not send a bucketization indication to the embedded controller 118, and bucketization is not performed.

Also, the computation offload control logic 126 determines, for the received database query 110, whether filtering is to be offloaded to the embedded controller 118 (or the external controller 124). If so, the computation offload control logic 126 sends a filtering indication 129 to the embedded controller 118 to cause the filtering logic 122 to filter data retrieved from a table 116.

An "indication" can refer to one or more instructions, one or more commands, one or more information elements, or any other type of indication that indicates that a respective computation (bucketization and/or filtering) is to be performed by a controller that receives the indication.

In some examples according to the present disclosure, both filtering and bucketization performed by the controller 118 or 124 can be performed at the row level. In other words, the filtering determines whether each respective row of a table is to be further processed, and the bucketization places rows into respective buckets. In other examples, filtering and/or bucketization can be performed at other granularity levels (e.g., pages, columns, or other blocks of data). Note that if the controller 118 or 124 is already performing filtering of data in a table, then also performing bucketization of the data in the table may not add significantly to the computation cost associated with the bucketization.

Assuming that the computation offload control logic 126 determines that one or more buckets are to be generated, the computation offload control logic 126 can send a request to a JIT compiler 130 that the JIT compiler 130 generate respective one or more JIT compiled code modules 128 for processing the data items included in the respective one or more buckets 121. An example of the JIT compiler 130 includes a JIT compiler from the LLVM Compiler Infrastructure. Other examples of JIT compilers can be used in other examples.

Examples of characteristics that can be shared by data items of a bucket can include any or some combination of the following: a data field is null or not, a data field has a regular length (e.g., a length of a data field is a multiple of a constant (such as a word size), or a length of a data field is fixed (e.g., the data field has a length of X, where X is a fixed value)), a length of the data field having a specified relationship to a threshold (e.g., smaller or greater than the threshold), a value of a data field is fixed (e.g., a gender field is equal to male or female, a year of birth is equal to a particular year, etc.), and other characteristics.

Any or some combination of the following characteristics can be used to determine the buckets.

A JIT compiled code module 128 can be generated for processing the data items included in a respective one or more buckets121 based on information relating to the database query 110. The information relating to the database query 110 can include information of a computation 129 to be performed as specified in the database query 110 or the query plan generated by a query optimizer of the database engine 108 for the database query 110. For example, the database query 110 or the query plan can specify a certain computation, such as SUM(T1.A), which is a computation that sums values of field A of table T1. Assuming a bucket is to be generated that includes rows where the value of T1.A is a shared fixed value, then the JIT compiled code module 128 generated by the JIT compiler 130 for this bucket can calculate a sum of T1.A of the rows in the bucket by simply multiplying the number of rows in the bucket by the shared fixed value, without even having to read the individual rows of the bucket.

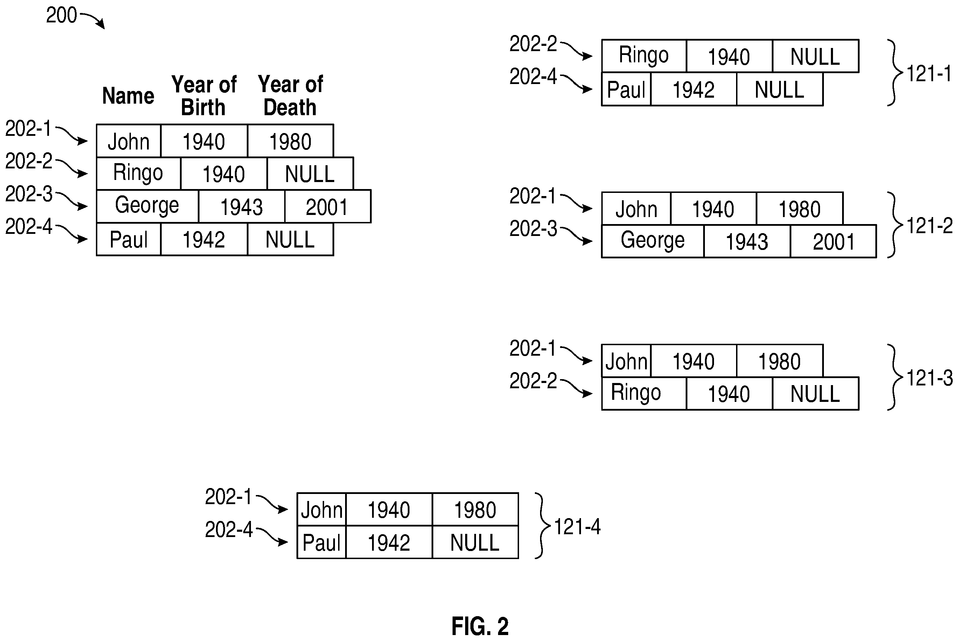

Fig. 2 shows an example database table 200 of a database. The database table 200 has four rows 202-1, 202-2, 202-3, and 202-4. The database table 200 is shown with just four rows to provide a simple example. A typical database table, however, may include a large number of rows (e.g., thousands, millions, or billions of rows).

In the example table database 200, each row has three fields (also referred to as attributes or columns). A Name field is assigned a value that indicates a name of a person, a Year Of Birth field is assigned a value that indicates a year of birth of the person, and a Year of Death field that is assigned a value that indicates a year of death (where applicable) of the person. Note that if a person is alive, the Year of Death field is assigned a null value.

Bucketization performed on the database table 200 can produce the following example buckets. Note that processing of a given database query can create just some (one or more) of the buckets shown in Fig. 2.

A first bucket 121-1 includes rows (202-2 and 202-4) that have a data field (Year of Death) that is set to null. A first JIT compiled code module 128 that is generated for processing the data items included in the bucket 121-1 can skip null checking, which involves checking whether the Year of Death field has a null value. The first JIT compiled code module 128 can assume that the Year of Death field is set to null and can skip null checking to reduce processing overhead. Skipping null checking decreases the number of instructions that are executed, and can also decrease the number of control flow operations. Skipping null checking can also increase the scope for compiler optimizations that can be performed by the JIT compiler 130 when generating the first JIT compiled code module 128.

A second bucket 121-2 includes rows (202-1 and 202-3) where the Year of Death field is not null. A second JIT compiled code module 128 that is specialized for the bucket 121-2 can also skip null checking, since it is known that the Year of Death field of the rows of the bucket 121-2 do not include a null value.

A third bucket 121-3 includes rows (202-1 and 202-2) where the Year of Birth field has a shared fixed value (e.g., 1940). A third JIT compiled code module 128 that is specialized for the bucket 121-3 does not have to read the Year of Birth field, since the third JIT compiled code module 128 knows that the Year of Birth field has the value "1940." When reading the rows of the third bucket 121-3, the third JIT compiled code module 128 can skip reading the Year of Birth field, which reduces the memory access time and also reduces processing consumption (e.g., the conversion of the Year of Birth field to another data format can be skipped). In fact, the Year of Birth field value of the rows of the third bucket 121-3 does not even have to be transferred from the storage device 106 to the host processor 102, since the third JIT compiled code module 128 is configured with the fixed value of the Year of Birth field of the rows in the third bucket 121-3. For example, the fixed value of the Year of Birth field can be indicated in metadata associated with third bucket 121-3, where the metadata is accessible by the third JIT compiled code module 128.

A fourth bucket 121-4 includes rows (202-1 and 202-4) that have lengths that are a multiple of a constant, such as a word size, or that have an identical length. A fourth JIT compiled code module 128 that is specialized for the bucket 121-4 can perform aligned memory accesses. An aligned memory access refers to a memory access of data from a line of a cache memory or another memory (such as the non-volatile memory 114). A line of a memory refers to a block of storage elements of a given size that can be retrieved from the memory with a single memory access. If a row of data has a length that is constant or a multiple of a constant, then it may be possible that a single memory access can retrieve the entire row from the memory in a line of the memory. Performing aligned memory accesses to retrieve rows can be computationally more efficient than performing unaligned or irregular memory accesses, in which multiple memory accesses may have to be performed to retrieve a row from a table. Generally, the computation offload control logic 126 can send a bucketization indication to the embedded controller 118 (or the external controller 124) which causes the embedded controller 118 (or the external controller 124) to generate a bucket that includes rows of the database table 200 that are accessible using aligned memory accesses based on the specific organization of the non-volatile memory 114.

As a further example, separate buckets can be generated for a field that has a long length (exceeds a length threshold) and for a field that has a short length (does not exceed the length threshold). A specialized code module for a field that has a long length may check the characters (numbers, alphabets, symbols, etc.) in a loop that processes the characters in an iterative manner until the end of the field is reached. On the other hand, a specialized code module for a field that has a short length can be implemented in a loop-free manner, where all characters of the field can be checked at one time. As a further example, a field that has a length that is a multiple of the size of a word can be processed with a specialized code module that includes vector instructions that implement a single-instruction multiple-data form of parallelism.

As additional examples, a bucket can include rows that share more than one characteristic. For example, a bucket can include rows where a first field has a null value, and a second field that has a shared fixed value.

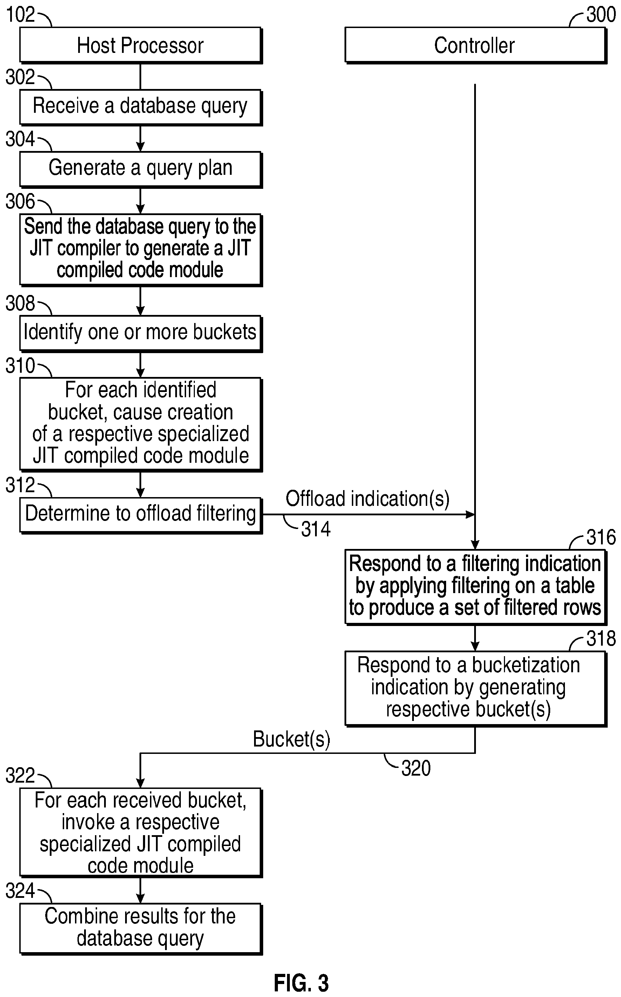

Fig. 3 is a flow diagram of a database query processing process according to some implementations of the present disclosure, which can be performed by the host processor 102 of Fig. 1A or 1B and a controller 300. The controller 300 can be the controller 118 or 124 of Fig. 1A or 1B. Although Fig. 3 shows an example process with a specific order of tasks, it is noted that in other examples, the process can be performed with a different order of tasks, or with alternative tasks.

The database engine 108 running on the host processor 102 receives (at 302) a database query from the client device 112. An example database query is set forth below:
SELECT AVG(Age) from T1 WHERE (AGE < 18).

In the foregoing example database query, a predicate (or condition) is specified in the WHERE clause. A row of table T1 satisfies the query predicate (AGE < 18) if a field (AGE) in the row is less than 18. The example database query also computes an average of values of the AGE field in the rows that satisfy the query predicate.

A query optimizer (not shown) of the database engine 108 generates (at 304) a query plan for the database query. For the example query above, the query plan can include a collection of tasks that are to be performed to access rows from table T1 that satisfy the query predicate, and to compute the average of the values of the field AGE in the rows that satisfy the query predicate.

The database engine 108 sends (at 306) the database query to the JIT compiler 130 to compile the database query into a JIT compiled code module (128). The machine executable code for the database query can be executed by the host processor 102 without interpreting the database query, which can speed up query processing. "Interpreting" a database query can refer to parsing the database query and generating steps that are executed to perform the actions specified by the database query. In other examples, JIT compilation of the database query is not performed.

Next, the computation offload control logic 126 identifies (at 308) one or more buckets to be generated. The generation of the identified bucket(s) is offloaded to a controller 300, which can be the embedded controller 118 in the storage device 106 or to the external controller 124 (Fig. 1A or 1B). As an example, the example database query above selects the AGE field from table T1, and computes an average of values of the AGE field in rows of table T1 that satisfy the query predicate. A first bucket can include rows were the field AGE is set to null, and a second bucket can include rows where the AGE field is not null. As a further example, another bucket can include rows where the AGE field is set to a shared fixed value. The decision of which buckets to create for processing of the database query can be based on the schema of table T1, the query plan for the database query, and statistics for the fields of table T1. For example, if the statistics indicate that there are a large number of rows in table T1 where the AGE field is set to null, then the first and second buckets noted above can be created.

For each identified bucket, the computation offload control logic 126 also causes generation (at 310) of a respective specialized JIT compiled code module, such as by instructing the JIT compiler 130 of Fig. 1A or 1B to generate the specialized JIT compiled code module 128.

Also, the computation offload control logic 126 can determine (at 312) to offload filtering of data of table T1 to the controller 300.

In determining which filtering can be offloaded, the computation offload control logic 126 determines whether the query predicate involves multiple tables. In some examples, filtering can be offloaded to perform filtering of rows of just one table. If the predicate of the received database query 110 involves multiple tables (e.g., a predicate specifying T1.A > 5 and T2.B = 0, where T1 and T2 are two different tables and A and B are data fields of the respective tables), then the computation offload control logic 126 can determine not to offload filtering, or alternatively, can offload individual filtering of the respective tables T1 and T2 based on the two different filtering conditions (T1.A > 5 and T2.B = 0).

Based on the bucketization decision and filtering determination made by the computation offload control logic 126, the computation offload control logic 126 can send (at 314) one or more offload indications to the controller 300 to perform the offloaded computation(s). An offload indication can refer to a bucketization indication (127) or a filtering indication (129). In this example, it is assumed that both a filtering indication and a bucketization indication are sent to the controller 300.

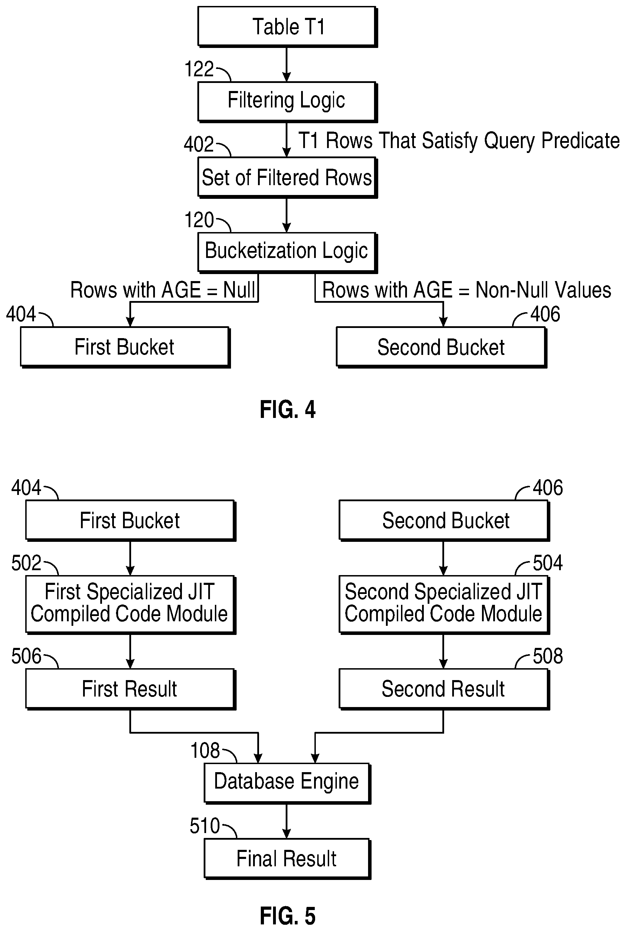

Referring to both Figs. 3 and 4, the controller 300 receives the one or more offload indications and forwards the one or more offload indications to the bucketization logic 120 and/or the filtering logic 122. For example, the filtering logic 122 in the controller 300 receives a filtering indication and responds to the filtering indication by applying filtering (at 316) on table T1 based on the filtering condition specified in the filtering indication (e.g., the filtering condition can include the predicate AGE < 18). The filtering logic 122 retrieves the rows of table T1, determines whether each row satisfies the filtering condition, and includes the row in a set of filtered rows 402 if the row satisfies the filtering condition. The filtering logic 122 excludes rows of table T1 that do not satisfy the filtering condition from the set of filtered rows 402. The set of filtered rows 402 can be stored in the temporary memory 119 of the storage device 106.

The bucketization logic 120 in the controller 300 receives a bucketization indication and responds to the bucketization indication by generating (at 318) respective one or more buckets based on the bucket condition included in the bucketization indication. For example, in the example of Fig. 4, the bucket condition can specify that a first bucket 404 be generated for rows where AGE is null and a second bucket 406 be generated for rows where AGE is not null. The bucketization logic 120 accesses each row in the set of filtered rows 402, and selectively places the row into the first bucket 404 or the second bucket 406 depending upon whether a value of the AGE field in the row has a null value or a non-null value, respectively. More generally, the bucketization logic 120 assigns a row to a bucket responsive to determining a relationship of a characteristic of the row with respect to the bucket condition.

A default or fallback bucket can also be defined, where a row processed by the bucketization logic 120 that does not satisfy the bucket condition of any of the other bucket(s) can be placed by the bucketization logic 120 into the default or fallback bucket.

The first and second buckets 404 and 406 can also be stored in the temporary memory 119 while rows are added to the first and second buckets 404 and 406.

Although Figs. 3 and 4 show that filtering is first performed before bucketization is performed, in other examples, the controller 300 can first perform bucketization before performing filtering. As yet another alternative, the controller 300 can jointly perform filtering and bucketization together, where each row retrieved from table T1 is processed based on both the filtering condition and bucket condition.

The controller 300 sends (at 320) the data items included in the respective generated bucket(s) back to the host processor 102. In examples where both filtering and bucketization have been offloaded to the controller 300, the amount of data in the bucket(s) returned to the host processor 102 can be less than if filtering were not applied. The sending of the bucket(s) from the controller 300 to the host processor 102 can use a push-based implementation in which the controller 300 can send the rows of a bucket (e.g., the data items included in the rows of a bucket) as the bucket is generated, or alternatively, a pull-based implementation in which the database engine 108 requests rows of a bucket from the storage device 106.

The controller 300 can also send metadata associated with the bucket(s) can be sent along with the buckets, such as an identifier of each bucket, the number of rows in each bucket, the size of each bucket (e.g., in bytes), and so forth.

Referring to both Figs. 3 and 5, for each bucket received from the controller 300, the database engine 108 invokes (at 322) a respective specialized JIT compiled code module 128 to process the data items included in a bucket. At the host processor 102, a first specialized JIT compiled code 502 is invoked to process the data items included in a first bucket 404, and a second specialized JIT compiled code 504 is invoked to process the data items included in a second bucket 406.

The example database query above calls for computing an average of the AGE field. The first specialized JIT compiled code module 502 for processing the rows of the first bucket 404 with the AGE field set to null can simply return a null value as a first result 506 for the rows of the first bucket 404. The second specialized JIT compiled code module 504 for processing the rows of the second bucket 406 with the AGE field set to non-null values can retrieve the non-null values of the rows of the second bucket 406 and compute the average of the non-null values as a second result 508.

Once the buckets are processed, the database engine 108 combines (at 324) the results 506 and 508 computed by the respective first and second specialized JIT compiled code modules 502 and 504 for the respective first and second buckets 404 and 406. In this example, the database engine 108 combines the first and second results 506 and 508 by taking the weighted average of the values the first and second results 506 and 508. The weighted average of a null value (in the first result 506) and a given average in the second result 508 is equal to the given average. Weights can be assigned to the respective first and second results 506 and 508 in calculating the weighted average. The weight assigned to a corresponding result can be based on the number of rows in the respective bucket (e.g., a larger number of rows in a bucket means that a proportionally larger weight is assigned to the bucket). The database engine 108 produces a final result 510 based on the combining of the first and second results 506 and 508, which can be returned as a response to the database query back to the client device 112 that submitted the database query.

Although Fig. 5 shows an example with two specialized JIT compiled code modules for processing data of respective two buckets, in other examples, there may be just one bucket with one associated specialized JIT compiled code module, or there may be more than two buckets with associated specialized JIT compiled code modules.

To enhance efficiency, processing of database data can be performed in batches, to allow for a pipeline of tasks to be performed where some of the tasks of the pipeline can be performed in parallel at the storage device 106 and the host processor 102. A "batch" can refer to a collection of data stored in the non-volatile memory 114 of the storage device 106. The size of the collection of data making up a batch can be preconfigured or can be dynamically set.

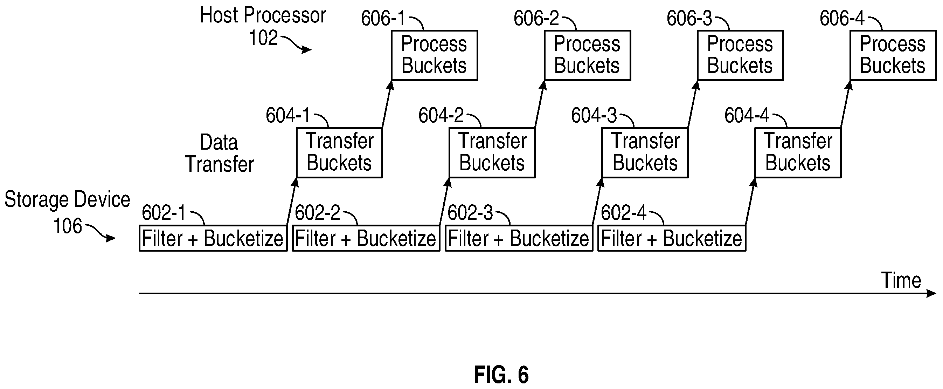

As shown in Fig. 6, the host processor 102 (which includes the database engine 108 in Fig. 1A or 1B) can request that the storage device 106 perform filtering and bucketization (602-1, 602-2, 602-3, 602-4, etc.) of respective batches of rows of a database table stored in the non-volatile memory 114 of the storage device 106. Once the storage device 106 completes filtering and bucketization (602-1) of a first batch of rows to generate a first set of buckets, the data items included in first set of buckets can be transferred (604-1) to the host processor 102. The transfer of the data items included in a set of buckets from the storage device 106 to the host processor 102 can be performed by a direct memory access (DMA) controller or by another entity. The host processor 102 then processes (606-1) the data items included in the first set of buckets using respective specialized JIT compiled code modules.

In parallel with the transfer (604-1) of the data items included in the first set of buckets and the processing (606-1) of the data items included in the first set of buckets, the host processing resource 600 can request that the storage device 106 perform filtering and bucketization (602-2) of a second batch of rows to generate a second set of buckets. The data items included in the second set of buckets is then transferred (604-2) to the host processor 102 and then processed (606-2) at the host processor 102. In this manner, the host processor 102 will have data items included in new buckets ready to be processed once processing of the data items included in the previous buckets has completed. To support such parallel processing, the temporary memory 119 in the storage device 106 for temporarily storing the data items included in buckets is allocated with sufficient capacity to store data items included in multiple sets of buckets associated with respective different filtering and bucketization tasks for different batches.

Similarly, the storage device 106 can perform filtering and bucketization (602-3) of a third batch of rows to generate a third set of buckets. The data items included in the third set of buckets is transferred (604-3) to the host processor 102 and then processed (606-3) at the host processor 102. Further, the storage device 106 can perform filtering and bucketization (602-4) of a fourth batch of rows to generate a fourth set of buckets. The data items included in the fourth set of buckets is transferred (604-4) to the host processor 102 and then processed (606-4) at the host processor 102.

The illustrated pipeline of tasks in Fig. 6 based on batches include tasks that can be performed in parallel by different entities, including the storage device 106, an entity that performs the data transfer, and the host processor 102. Thus, while the host processor 102 is processing data items included in a previous set of buckets, the storage device 106 can generate the next set of buckets and transfers the data items included in the next set of buckets to the host processor 102.

To keep track of the batch filtering and bucketization performed at the storage device 106, tracking metadata can be maintained at the storage device 106 to indicate the data item (e.g., last page, last row, etc.) processed. The tracking metadata can be sent along with a data items of respective set of buckets to the host processor 102, so that the host processor can request filtering and bucketization on the next batch.

Metadata sent to the host processor 102 along with each set of buckets can also indicate the size of each bucket, so that the host processor 102 600 can allocate sufficient memory in the memory of the host processor 102 600 to store data items included in each bucket during processing.

In addition, in examples where the host processor 102 uses a pull-based implementation to retrieve rows of a bucket (e.g., data items included in rows of a bucket) from the storage device 106, the metadata sent to the host processor 102 can further include information identifying the rows of the bucket, so that the host processor 102 can request that bucket's rows from the storage device 106 for processing the data items included in the requested bucket's rows using a respective specialized JIT compiled code module.

For improved performance in the pull-based implementation, the host processor 102 can further prefetch rows of other buckets (e.g., prefetch data includes included in rows of the other buckets) while data items included in rows of a current bucket are being processed by the host processor 102.

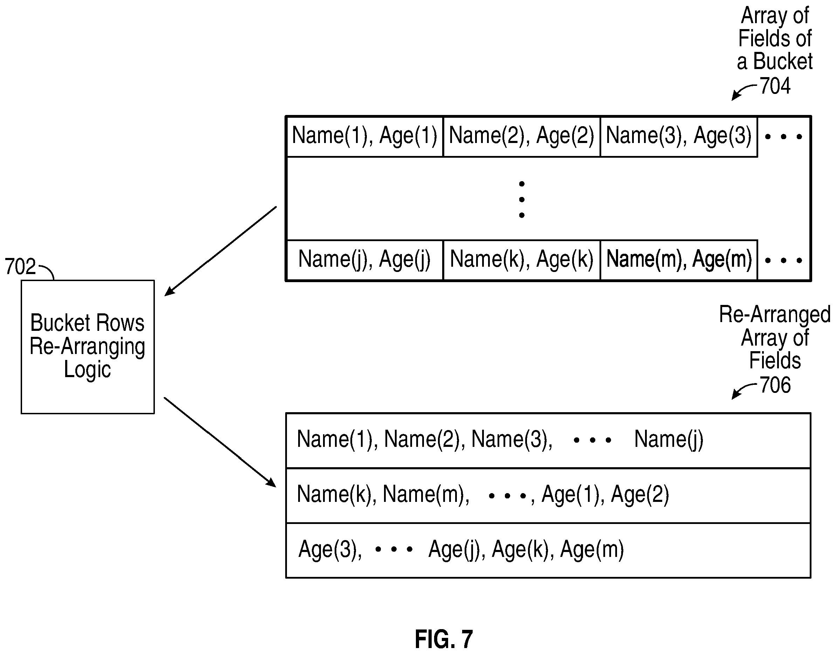

Fig. 7 shows the claimed implementation of the present disclosure that rearranges the rows of a bucket to optimize for memory-access locality. A bucket rows re-arranging logic 702 can re-arrange fields of rows of a bucket to reduce the number of memory accesses involved in retrieving data for processing by a respective JIT compiled code module.

The bucket rows re-arranging logic 702 is part of the embedded controller 118 or the external controller 124.

The rows of a bucket can be stored in a memory, such as the temporary memory 119, as an array of fields 704. Note that the memory can include multiple pages of data. A page of data can include data from multiple rows of a bucket. In the example of Fig. 7, it is assumed each row has two fields: Name, Age. In the array of fields 704 of the bucket, the fields of multiple rows can be stored in each page of memory. For example, the fields Name(1), Age(1) (of a first row), Name(2), Age(2) (of a second row), Name(3), Age(3) (of a third row), and so forth, can be stored in a first page of the array of fields 704. Similarly, the fields Name(j), Age(j) (of row j), Name(k), Age(k) (of row k), Name(m), Age(m) (of row m), and so forth, can be stored in another page of the array of fields 704.

In an example where the respective JIT compiled code module for the bucket processes just the Age field (and not the Name field), then accessing data stored as the array of fields 704 may not be efficient. To retrieve the value of Age(1), the respective JIT compiled code module would also retrieve Name(1), which is not used by the respective JIT compiled code module and thus constitutes a wasted memory access.

The bucket rows re-arranging logic 702 transforms the array of fields 704 into a re-arranged array of fields 706. In the re-arranged array of fields 706, the values of the Name field from the different rows are stored first, followed by the values of the Age field from the different rows. In the example of Fig. 7, the first page in the re-arranged array of fields 706 includes Name(1), Name(2), Name(3), ..., Name(j). The second page in the re-arranged array of fields 706 includes Name(k), Name(m), ..., Age(1), Age(2), .... The third page in the re-arranged array of fields 706 includes Age(3), ..., Age(j), Age(k), Age(m), ....

When the respective JIT compiled code module accesses the memory to retrieve Age(1), the page containing Age(2) will also be retrieved (along with Name(k) and Name(m)). However, when the respective JIT compiled code module accesses the page containing Age(3), then Age(j), Age(k), Age(m), and so forth, are also retrieved (such as into a cache memory). With the re-arranged array of fields 706, memory access locality for the Age field values is increased since the Age field values are stored in sequence in the memory, which can reduce the number of memory accesses to retrieve all Age field values of the rows of the bucket for processing. Rather, the retrieved Age field values can be stored in the cache memory and accessed from the cache memory for processing.

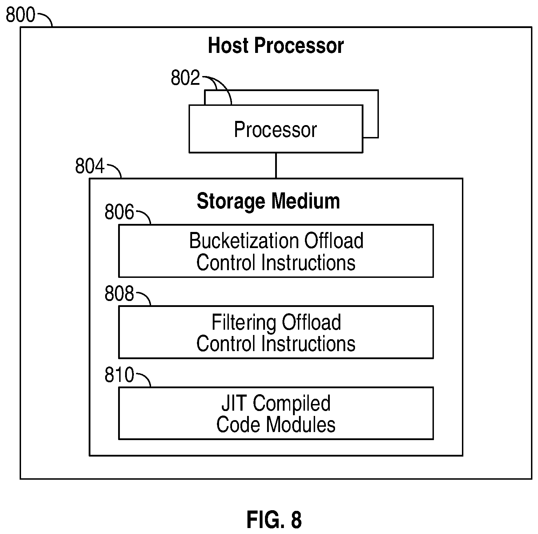

Fig. 8 is a block diagram of another example host processor 800, which includes one or more processors 802 and a non-transitory machine-readable or computer-readable storage medium 804 that stores machine-readable instructions executable on the one or more processors 802 to perform various tasks. The machine-readable instructions include bucketization offload control instructions 806 to determine whether buckets are to be generated, and if so, to offload the generation of the buckets to a storage device.

The machine-readable instructions further include filtering offload control instructions 808 to determine whether filtering of data of a table is to be performed, and if so, to offload the filtering to the storage device.

The machine-readable instructions further include JIT compiled code modules 810 to process data items of respective buckets.

The storage medium 804 can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A controller (118, 124, 300) comprising:
bucketization logic (120) configured to:
receive a bucketization indication (127) from a host processor (102),
in response to the bucketization indication, partition data stored in a memory (114) of a storage device (106) into buckets (121), wherein a first bucket of the buckets comprises data items that share a first common characteristic, and
send data items of the first bucket to the host processor for processing by the host processor using a first Just-In-Time, JIT, compiled code module (128) configured for the first common characteristic of the first bucket, and
bucket rows re-arranging logic (702) configured to rearrange data items of the first bucket such that data items which correspond to values of a common field are stored in sequence prior to sending the data items of the first bucket to the host processor.

2. The controller of claim 1, wherein a second bucket of the buckets comprises data items that share a second common characteristic, and wherein the bucketization logic is configured to:
send data items of the second bucket to the host processor for processing by the host processor using a second code module configured for the second common characteristic of the second bucket.

3. The controller of any of claims 1 to 2, wherein the bucketization indication comprises a bucket condition, and the bucketization logic is configured to assign a respective data item to the first bucket responsive to determining a relationship of a characteristic of the respective data item with respect to the bucket condition.

4. The controller of claim 3, wherein the bucket condition specifies that a data item comprising a field having a null value belongs to the first bucket.

5. The controller of claim 3, wherein the bucket condition specifies that a data item comprising a field having a regular length belongs to the first bucket.

6. The controller of claim 3, wherein the bucket condition specifies that a data item comprising a field having a same constant value belongs to the first bucket.

7. The controller of claim 3, wherein the bucket condition specifies that a data item comprising a field with a length having a specified relationship to a specified length threshold belongs to the first bucket.

8. The controller of any of claims 1 to 7, wherein the controller (124) is part of a computation device between the storage device and the host processor.

9. A non-transitory machine-readable storage medium (804) comprising instructions that upon execution cause a host processor (102, 800) comprising one or more processors (802) to:
send a bucketization indication (127) to a storage device (106) to partition data stored in a memory (114) of the storage device into a plurality of buckets (121), wherein data items in each respective bucket of the plurality of buckets share a corresponding common characteristic;
receive, from the storage device, the plurality of buckets generated in response to the bucketization indication, wherein data items in each of the plurality of buckets which correspond to values of a common field are received in sequence; and
execute Just-In-Time, JIT, compiled code modules (128) to process data items in respective buckets of the plurality of buckets, each code module configured for the corresponding common characteristic of the respective bucket.

10. The non-transitory machine-readable storage medium of claim 9, wherein the instructions upon execution cause the host processor to:
generate the code modules at runtime of the system using information relating to a database query (110) and information of the data available at runtime.

11. The non-transitory machine-readable storage medium of claim 10, wherein the instructions upon execution cause the host processor to:
receive the database query to access a database comprising the data stored in the storage device; and
determine the plurality of buckets based on the database query,
wherein generating the code modules at runtime is responsive to the database query.

12. The non-transitory machine-readable storage medium of any of claims 9 to11, wherein sending the bucketization indication to the storage device comprises:
sending bucket conditions to the storage device, each respective bucket condition of the bucket conditions specifying the corresponding common characteristic of the respective bucket of the plurality of buckets.

13. A method comprising:
sending, by a host processor (102, 800), a bucketization indication (127) to a storage device (106), the bucketization indication comprising a bucket condition to cause the storage device to determine which data stored in a memory (114) of the storage device belong to a bucket (121), wherein data items in the bucket share a corresponding common characteristic;
receiving, by the host processor from the storage device, the data items of the bucket produced in response to the bucketization indication, wherein data items of the bucket which correspond to values of a common field are received in sequence; and
executing a Just-In-Time, JIT, compiled code module (128) to process the data items in the bucket, the code module configured for the common characteristic of the bucket.

14. The method of claim 13, wherein the bucketization indication comprises another bucket condition to cause the storage device to determine which data stored in the memory belong to a further bucket, the method further comprising:
receiving, by the host processor from the storage device, the data items of the further bucket produced in response to the bucketization indication; and
executing a further code module to process the data items in the further bucket, the further code module configured for a further common characteristic of the further bucket.

## Patentansprüche

1. Steuerung (118, 124, 300), die umfasst:
eine Bucketization-Logik (120), die konfiguriert ist zum:
Empfangen einer Bucketization-Anzeige (127) von einem Host-Prozessor (102),
als Reaktion auf die Bucketization-Anzeige, Aufteilung von Daten, die in einem Speicher (114) einer Speicherungsvorrichtung (106) gespeichert sind, in Buckets (121), wobei ein erster Bucket der Buckets Datenelemente, die eine erste gemeinsame Eigenschaft teilen, umfasst, und
Senden von Datenelementen des ersten Buckets an den Host-Prozessor zum Verarbeiten durch den Host-Prozessor unter Verwendung eines ersten Just-In-Time(JIT)-kompilierten Codemoduls (128), das für die erste gemeinsame Eigenschaft des ersten Buckets konfiguriert ist, und
eine Bucket-Zeilen-Neuanordnungslogik (702), die konfiguriert ist, um Datenelemente des ersten Buckets derart neu anzuordnen, dass Datenelemente, die Werten eines gemeinsamen Feldes entsprechen, sequenziell gespeichert werden, bevor die Datenelemente des ersten Buckets an den Host-Prozessor gesendet werden.

2. Steuerung nach Anspruch 1, wobei ein zweiter Bucket der Buckets Datenelemente umfasst, die eine zweite gemeinsame Eigenschaft teilen, und wobei die Bucketization-Logik konfiguriert ist zum:
Senden von Datenelementen des zweiten Buckets an den Host-Prozessor zum Verarbeiten durch den Host-Prozessor unter Verwendung eines zweiten Codemoduls, das für die zweite gemeinsame Eigenschaft des zweiten Buckets konfiguriert ist.

3. Steuerung nach einem der Ansprüche 1 bis 2, wobei die Bucketization-Anzeige eine Bucket-Bedingung umfasst und die Bucketization-Logik konfiguriert ist, um dem ersten Bucket als Reaktion auf ein Bestimmen einer Beziehung einer Eigenschaft des jeweiligen Datenelements in Bezug auf die Bucket-Bedingung ein jeweiliges Datenelement zuzuweisen.

4. Steuerung nach Anspruch 3, wobei die Bucket-Bedingung spezifiziert, dass ein Datenelement, das ein Feld umfasst, das einen Null-Wert aufweist, zu dem ersten Bucket gehört.

5. Steuerung nach Anspruch 3, wobei die Bucket-Bedingung spezifiziert, dass ein Datenelement, das ein Feld umfasst, das eine reguläre Länge aufweist, zu dem ersten Bucket gehört.

6. Steuerung nach Anspruch 3, wobei die Bucket-Bedingung spezifiziert, dass ein Datenelement, das ein Feld umfasst, das einen gleichen konstanten Wert aufweist, zu dem ersten Bucket gehört.

7. Steuerung nach Anspruch 3, wobei die Bucket-Bedingung spezifiziert, dass ein Datenelement, das ein Feld mit einer Länge umfasst, die eine spezifizierte Beziehung zu einer spezifizierten Längenschwelle aufweist, zu dem ersten Bucket gehört.

8. Steuerung nach einem der Ansprüche 1 bis 7, wobei die Steuerung (124) Teil einer Rechenvorrichtung zwischen der Speicherungsvorrichtung und dem Host-Prozessor ist.

9. Nicht-flüchtiges maschinenlesbares Speicherungsmedium (804), das Anweisungen umfasst, die bei Ausführung einen Host-Prozessor (102, 800), der einen oder mehrere Prozessoren (802) umfasst, veranlassen zum:
Senden einer Bucketization-Anzeige (127) an eine Speicherungsvorrichtung (106), um Daten, die in einem Speicher (114) der Speicherungsvorrichtung gespeichert sind, in eine Vielzahl von Buckets (121) aufzuteilen, wobei Datenelemente in jedem jeweiligen Bucket der Vielzahl von Buckets eine entsprechende gemeinsame Eigenschaft teilen;
Empfangen, von der Speicherungsvorrichtung, der Vielzahl von Buckets, die als Reaktion auf die Bucketization-Anzeige erzeugt werden, wobei Datenelemente in jedem der Vielzahl von Buckets, die Werten eines gemeinsamen Felds entsprechen, sequenziell empfangen werden; und
Ausführen von Just-In-Time(JIT)-kompilierten Codemodulen (128), um Datenelemente in jeweiligen Buckets der Vielzahl von Buckets zu verarbeiten, wobei jedes Codemodul für die entsprechende gemeinsame Eigenschaft des jeweiligen Buckets konfiguriert ist.

10. Nicht-flüchtiges maschinenlesbares Speicherungsmedium nach Anspruch 9, wobei die Anweisungen bei Ausführung den Host-Prozessor veranlassen zum:
Erzeugen der Codemodule zu einer Laufzeit des Systems unter Verwendung von Informationen bezüglich einer Datenbankabfrage (110) und Informationen der Daten, die zu der Laufzeit verfügbar sind.

11. Nicht-flüchtiges maschinenlesbares Speicherungsmedium nach Anspruch 10, wobei die Anweisungen bei Ausführung den Host-Prozessor veranlassen zum:
Empfangen der Datenbankabfrage, um auf eine Datenbank zuzugreifen, die die Daten, die in der Speicherungsvorrichtung gespeichert sind, umfasst; und
Bestimmen der Vielzahl von Buckets basierend auf der Datenbankabfrage,
wobei das Erzeugen der Codemodule zu der Laufzeit auf die Datenbankabfrage reagiert.

12. Nicht-flüchtiges maschinenlesbares Speicherungsmedium nach einem der Ansprüche 9 bis 11, wobei das Senden der Bucketization-Anzeige an die Speicherungsvorrichtung umfasst:
Senden von Bucket-Bedingungen an die Speicherungsvorrichtung, wobei jede jeweilige Bucket-Bedingung der Bucket-Bedingungen die entsprechende gemeinsame Eigenschaft des jeweiligen Buckets der Vielzahl von Buckets spezifiziert.

13. Verfahren, das umfasst:
Senden, durch einen Host-Prozessor (102, 800), einer Bucketization-Anzeige (127) an eine Speicherungsvorrichtung (106), wobei die Bucketization-Anzeige eine Bucket-Bedingung umfasst, um zu veranlassen, dass die Speicherungsvorrichtung bestimmt, welche Daten, die in einem Speicher (114) der Speicherungsvorrichtung gespeichert sind, zu einem Bucket (121) gehören, wobei Datenelemente in dem Bucket eine entsprechende gemeinsame Eigenschaft teilen;
Empfangen, durch den Host-Prozessor von der Speicherungsvorrichtung, der Datenelemente des Buckets, die als Antwort auf die Bucketization-Anzeige produziert werden, wobei Datenelemente des Buckets, die Werten eines gemeinsamen Feldes entsprechen, sequenziell empfangen werden; und
Ausführen eines Just-In-Time(JIT)-kompilierten Codemoduls (128), um die Datenelemente in dem Bucket zu verarbeiten, wobei das Codemodul für die gemeinsame Eigenschaft des Buckets konfiguriert ist.

14. Verfahren nach Anspruch 13, wobei die Bucketization-Anzeige eine weitere Bucket-Bedingung umfasst, um zu veranlassen, dass die Speicherungsvorrichtung bestimmt, welche Daten, die in dem Speicher gespeichert sind, zu einem weiteren Bucket gehören, wobei das Verfahren ferner umfasst:
Empfangen, durch den Host-Prozessor von der Speicherungsvorrichtung, der Datenelemente des weiteren Buckets, die als Antwort auf die Bucketization-Anzeige produziert werden; und
Ausführen eines weiteren Codemoduls, um die Datenelemente in dem weiteren Bucket zu verarbeiten, wobei das weitere Codemodul für eine weitere gemeinsame Eigenschaft des weiteren Buckets konfiguriert ist.

## Revendications

1. Dispositif de commande (118, 124, 300) comprenant :
la logique de catégorisation (120) configurée pour :
recevoir une indication de catégorisation (127) provenant d'un processeur hôte (102), en réponse à l'indication de catégorisation, partitionner des données stockées dans une mémoire (114) d'un dispositif de stockage (106) en catégories (121), dans lequel une première catégorie des catégories comprend des éléments de données qui partagent une première caractéristique commune, et
envoyer des éléments de données de la première catégorie au processeur hôte pour qu'il les traite à l'aide d'un premier module de code compilé juste à temps, JIT, (128) configuré pour la première caractéristique commune de la première catégorie, et
de la logique de restructuration des rangées de catégorie (702) configurée pour restructurer des éléments de données de la première catégorie de telle sorte que des éléments de données correspondant à des valeurs d'un champ commun sont stockés dans l'ordre avant l'envoi des éléments de données de la première catégorie au processeur hôte.

2. Dispositif de commande selon la revendication 1, dans lequel une seconde catégorie des catégories comprend des éléments de données qui partagent une seconde caractéristique commune, et dans lequel la logique de catégorisation est configurée pour :
envoyer des éléments de données de la seconde catégorie au processeur hôte pour qu'il les traite à l'aide d'un second module de code configuré pour la seconde caractéristique commune de la seconde catégorie.

3. Dispositif de commande selon l'une quelconque des revendications 1 à 2, dans lequel l'indication de catégorisation comprend une condition de catégorie, et la logique de catégorisation est configurée pour attribuer un élément de données respectif à la première catégorie en réponse à la détermination d'une relation d'une caractéristique de l'élément de données respectif par rapport à la condition de catégorie.

4. Dispositif de commande selon la revendication 3, dans lequel la condition de catégorie spécifie qu'un élément de données comprenant un champ présentant une valeur nulle appartient à la première catégorie.

5. Dispositif de commande selon la revendication 3, dans lequel la condition de catégorie spécifie qu'un élément de données comprenant un champ présentant une longueur régulière appartient à la première catégorie.

6. Dispositif de commande selon la revendication 3, dans lequel la condition de catégorie spécifie qu'un élément de données comprenant un champ présentant une même valeur constante appartient à la première catégorie.

7. Dispositif de commande selon la revendication 3, dans lequel la condition de catégorie spécifie qu'un élément de données comprenant un champ dont une longueur présentant une relation spécifiée avec un seuil de longueur spécifié appartient à la première catégorie.

8. Dispositif de commande selon l'une quelconque des revendications 1 à 7, dans lequel le dispositif de commande (124) fait partie d'un dispositif de calcul entre le dispositif de stockage et le processeur hôte.

9. Support de stockage non transitoire lisible par machine (804) comprenant des instructions qui, lors de leur exécution, amènent un processeur hôte (102, 800) comprenant un ou plusieurs processeurs (802) à :
envoyer une indication de catégorisation (127) à un dispositif de stockage (106) pour partitionner des données stockées dans une mémoire (114) du dispositif de stockage en une pluralité de catégories (121), dans lequel des éléments de données dans chaque catégorie respective de la pluralité de catégories partagent une caractéristique commune correspondante ;
recevoir, à partir du dispositif de stockage, la pluralité de catégories générées en réponse à l'indication de catégorisation, dans lequel des éléments de données dans chacune des catégories correspondant aux valeurs d'un champ commun sont reçus dans l'ordre ; et
exécuter des modules de code compilés juste à temps, JIT, (128) pour traiter des éléments de données dans des catégories respectives de la pluralité de catégories, chaque module de code étant configuré pour la caractéristique commune correspondante de la catégorie respective.

10. Support de stockage non transitoire lisible par machine selon la revendication 9, dans lequel les instructions, lors de leur exécution, amènent le processeur hôte à :
générer les modules de code au moment de l'exécution du système à l'aide d'informations relatives à une interrogation de base de données (110) et d'informations des données disponibles au moment de l'exécution.

11. Support de stockage non transitoire lisible par machine selon la revendication 10, dans lequel les instructions, lors de leur exécution, amènent le processeur hôte à :
recevoir l'interrogation de base de données pour accéder à une base de données comprenant les données stockées dans le dispositif de stockage ; et
déterminer la pluralité de catégories sur la base de l'interrogation de la base de données,
dans lequel la génération des modules de code au moment de l'exécution répond à l'interrogation de la base de données.

12. Support de stockage non transitoire lisible par machine selon l'une quelconque des revendications 9 à 11, dans lequel l'envoi de l'indication de catégorisation au dispositif de stockage comprend :
l'envoi de conditions de catégorie au dispositif de stockage, chaque condition de catégorie respective des conditions de catégorie spécifiant la caractéristique commune correspondante de la catégorie respective de la pluralité de catégories.

13. Procédé comprenant :
l'envoi, par un processeur hôte (102, 800), d'une indication de catégorisation (127) à un dispositif de stockage (106), l'indication de catégorisation comprenant une condition de catégorie pour amener le dispositif de stockage à déterminer quelles données stockées dans une mémoire (114) du dispositif de stockage appartiennent à une catégorie (121), dans lequel des éléments de données dans la catégorie partagent une caractéristique commune correspondante ;
la réception, par le processeur hôte à partir du dispositif de stockage, des éléments de données de la catégorie produits en réponse à l'indication de catégorisation, dans lequel des données de catégorie correspondant à des valeurs d'un champ commun sont reçues dans l'ordre ; et
l'exécution d'un module de code compilé juste à temps, JIT, (128) pour traiter les éléments de données dans la catégorie, le module de code étant configuré pour la caractéristique commune de la catégorie.

14. Procédé selon la revendication 13, dans lequel l'indication de catégorisation comprend une autre condition de catégorie pour amener le dispositif de stockage à déterminer quelles données stockées dans la mémoire appartiennent à une autre catégorie, le procédé comprenant en outre :
la réception, par le processeur hôte à partir du dispositif de stockage, des éléments de données de l'autre catégorie produits en réponse à l'indication de catégorisation ; et
l'exécution d'un autre module de code pour traiter les éléments de données dans l'autre catégorie, l'autre module de code étant configuré pour une autre caractéristique commune de l'autre catégorie.
